# EUROPÄISCHE PATENTSCHRIFT

(11) **EP 2 085 841 B1**
(45) Veröffentlichungstag und Bekanntmachung des Hinweises auf die Patenterteilung: **13.10.2010**
(21) Anmeldenummer: 08104775.5
(22) Anmeldetag: 17.07.2008
(51) Int. Cl.: G05B 19/042, G05B 19/418

(54) **Sensor mit Zeitglied zum Ausgeben einer Objekterfassungszeit**
Sensor with timing element to emit an object detection time
Capteur avec horloge pour fournir le temps de détection d' un objet

(30) Priorität: 31.01.2008 EP 08001825
(43) Veröffentlichungstag der Anmeldung: 05.08.2009
(73) Patentinhaber: SICK AG, 79183 Waldkirch (DE)
(72) Erfinder: Blümcke, Thomas, 79312, Emmendingen (DE); Tritschler, Markus, 79395, Neuenburg (DE); Hils, Winfried, 72250, Freudenstadt (DE); Moritz, Frank, 79102, Freiburg (DE)
(74) Vertreter: Ludewigt, Christoph

(56) Entgegenhaltungen:
- EP-A- 0 903 655
- EP-A- 1 015 947
- EP-A- 1 768 006
- WO-A-2006/042799
- US-A- 5 844 802
- US-B1- 6 236 277

## Beschreibung

Die vorliegende Erfindung betrifft einen Sensor gemäß dem Oberbegriff des Anspruchs 1 sowie ein Verfahren zum Betreiben des Sensors.

Vorrichtungen und Verfahren, bei denen ein auf einer Fördereinrichtung befindliches Objekt entiang einer Bearbeitungsstrecke geführt wird, das an einer bestimmten Position erfasst und bei einer anderen Position bearbeitet wird, werden hier als Bearbeitungseinrichtungen oder als Durchlaufmaschinen bezeichnet. Hierbei werden Werkstücke, hier als Objekte bezeichnet, wie zum Beispiel steifes Plattenmaterial wie Vollholz- bzw. Spanplatten, sogenannte Tischlerplatten, Sperrholzlatten, Verbundplatten aus Holz, Kunststoff oder Metall oder dergleichen auf einer Fördereinrichtung erfasst und daraufhin wird eine Bearbeitung an denselben durchgeführt.

Natürlich kann bei solch einer Durchlaufbearbeitung nicht nur ein Bearbeitungsvorgang an den Objekten ausgeführt werden, sondern verschiedene Bearbeitungen sind möglich, wie zum Beispiel Schneiden, Fräsen, Schleifen, Bohren, etc. Ferner ist es auch möglich, andere Teile auf die Objekte, wie zum Beispiel Werkstücke, aufzubringen bzw. aufzukleben oder aufzuschrauben. So kann beispielsweise bei einem automatisierten Ablauf einer Werkstückbearbeitung das Werkstück an mehrere Bearbeitungsstationen mittels einer Fördereinrichtung mit Band- oder Kettenförderer geführt werden, ohne dass Personen in den Arbeitsablauf eingreifen müssen. Hierbei ist es äußerst wichtig, dass die Position des Werkstücks auf der Fördereinrichtung immer genau bekannt ist, so dass eine darauf folgende Bearbeitung auch an der richtigen Stelle des Werkstücks ausgeführt wird.

Herkömmlich sind Durchlaufmaschinen mit einer Werkstückerfassung und einem Wegmesssystem ausgestattet, deren Signale einer Steuereinheit zur Verarbeitung zugeführt werden. Im Einlaufbereich der Fördereinrichtung kann dabei ein Werkstück erfasst und ein entsprechendes Signal ausgegeben werden. Da ferner die ungefähre Geschwindigkeit des Transportbandes oder der Transportkette, z. B. durch Messung des zurückgelegten Weges bei verschiedenen Zeitpunkten, ermittelt werden kann, kann dadurch die ungefähre Position des Werkstückes in der Durchlaufmaschine ermittelt werden. Durch Positionierung von Sensoren an der Fördereinrichtung kann somit auch ein Signal ausgegeben werden, das kennzeichnet, dass die Ankunft eines Werkstückes bzw. Objekts bei einem Sensor gemessen wird, was der Position des Werkstückes entspricht. Daraufhin kann einem nachgeschalteten Aktor befohlen werden, zu schalten oder sich zu bewegen, so dass nach einer bestimmten zurückgelegten Strecke des Werkstücks weg vom Sensor dieses durch den Aktor bearbeitet wird. Somit ist eine kontinuierliche Bearbeitung von Werkstücken in mehreren Bearbeitungsstationen ohne menschliches Eingreifen möglich. Ein Sensor meldet daher, z. B. durch ein Triggersignal, dass er gemessen hat und einem Aktor wird durch ein weiteres Signal befohlen, dass er schalten bzw. sich bewegen soll.

Aus der obigen Beschreibung wird klar, dass die Anzahl der bearbeiteten Teile stark von der Geschwindigkeit der Fördereinrichtung abhängt; das heißt, durch Verdoppeln der Geschwindigkeit lässt sich auch der Durchsatz verdoppeln. Jedoch werden Störeinflüsse auf die Position des Werkstücks gravierender und eine Präzision geringer, je höher die Geschwindigkeit ist. Störeinflüsse sind zum Beispiel die Reaktion der Steuerung, der Schlupf bei Vorschub des Werkstücks, Toleranzen im Vorschubtransport und bei der Werkstückerfassung, die sich nur innerhalb gewisser Präzisionsgrenzen erfassen lassen.

Eine Bearbeitungseinrichtung im Sinne der Erfindung ist jedes System, das verteilte Zeiten besitzt, und wo die Zeit eines Auftretens eines Ereignisses, wie zum Beispiel das Erfassen eines Objektes, von einer Einheit zu einer anderen gesendet werden kann, danach verarbeitet werden und dann als Bearbeitungszeit nach einem Ereigniszeitpunkt die Durchführung eines Betriebs angeben kann. Somit ist die Bearbeitungseinrichtung insbesondere für eine Durchlaufmaschine geeignet, muss aber nicht notwendigerweise ein Teil einer Durchlaufmaschine sein, da auch Fälle denkbar sind, bei denen ein erstes Objekt erfasst wird, aber ein Betrieb an einem zweiten Objekt durchgeführt wird, das nicht zusammen mit dem ersten Objekt auf einer Fördereinrichtung liegen muss.

In bisherigen Bearbeitungsmaschinen kommen eine Vielzahl einfacher binärer Sensoren zum Einsatz, die recht kostengünstig sind. Diese Sensoren sind deshalb einfach, weil sie lediglich die Anwesenheit eines Objektes detektieren können. Das Schaltsignal dieser Sensoren muss stets in regelmäßigen Zeitabständen abgefragt werden. Eine solche Abfrage (Kommunikation) der Vielzahl derartiger Sensoren begrenzt die Ansprechzeit und damit insgesamt die Bearbeitungszeit. Eine Rearbeitungsmaschine mit derartigen abzufragenden Sensoren stößt mittlerweile an zeitliche Grenzen und ist insgesamt in unbefriedigender Weise zu langsam. Aus der EP 1 768 006 A2 ist der Einsatz solcher Sensoren bekannt.

Die WO 2006/042799 A2 beschreibt ein Verfahren und eine Einrichtung zur Analyse eines technischen Prozesses. Für diese Analyse werden zeitabhängig Messdaten und Bilder von dem Prozess bzw. Prozessprodukt aufgenommen und gegebenenfalls grafisch dargestellt. Die darzustellenden, in der Regel kontinuierlich veränderbaren Messdaten werden mit Messeinrichtungen erfasst, die selbst schon einen Zeitgeber enthalten, so dass die Messeinrichtung bereits die vollständigen Koordinaten (Messwert und Zeitpunkt) der einzelnen darzustellenden Messpunkte liefert.

Somit ist es eine Aufgabe der vorliegenden Erfindung, einen Sensor und ein Verfahren zum Betreiben des Sensors für eine Bearbeitungseinrichtung bereitzustellen, mit dem die Bearbeitungseinrichtung effizienter Objekte bearbeiten und eine Präzision in der Bestimmung von Position und Länge der sich bewegenden Objekte verbessern kann, ohne dass eine Durchlaufgeschwindigkeit der Objekte reduziert werden muss. Es kann sogar gleichzeitig die Durchlaufgeschwindigkeit erhöht werden kann, wobei der Sensor weiterhin kostengünstig gehalten bleiben soll.

Diese Aufgabe wird gelöst durch einen Sensor mit den Merkmalen des Anspruchs 1 und insbesondere durch einen Sensor, insbesondere zum Einsatz in einer Bearbeitungseinrichtung, die eine Steuereinheit mit Zeitgeber zum Ausgeben einer Systemzeit sowie mindestens eine mit der Steuereinheit verbundene Maschineneinheit zum Empfangen der Systemzeit umfasst und der Sensor als binärer Sensor zur Ausgabe eines binären Objekterfassungssignals ausgebildet ist, wobei erfindungsgemäß der Sensor ein als Zähler ausgebildetes Zeitglied aufweist, das eine Sensorzeitbasis bereitstellt, die mit der Systemzeit über ein Synchronisationssignal periodisch synchronisierbar ist und der Zähler durch das Synchronisationssignal rücksetzbar ist und einerseits das Objekterfassungssignal und andererseits ein für die Objekterfassungszeit repräsentatives Zeitsignal der Sensorzeitbasis als Zählerstand, also quasi ein Zeitstempel, ausgebbar ist.

In der Anwendung des erfindungsgemäßen Sensors kann dieser das Ereignis mit der nach Synchronisation auf der Systemzeit basierenden Ereigniszeit als Erfassungssignal an die Steuereinheit ausgeben. Somit wird die Steuereinheit der Bearbeitungseinrichtung über die Ereigniszeit informiert, die letztendlich auf der Systemzeit basiert, und kann andere Maschineneinheiten mit einer objektiven, genauen Zeitangabe auf Basis der Systemzeit anweisen, einen Betrieb durchzuführen.

So kann die Steuereinheit die genaue Bearbeitungszeit, basierend auf der Ereigniszeit, berechnen. Diese Genauigkeit war in bisherigen Systemen nicht möglich, denn die Genauigkeit war begrenzt durch die Taktrate der Steuerung (Master), also die Rate mit der der Schaltzustand der Sensoren abgefragt wird. Mit der Erfindung gibt der Sensor aber nicht nur seinen Schaltzustand aus, sondern zusätzlich noch den Zeitstempel, der angibt, wann innerhalb eines Steuerungtaktes das Schaltereignis auftrat, so dass eine erheblich genauere Zeitinformation über das Schaltereignis vorliegt. Dies wirkt sich erheblich auf die Durchlaufzeit eines Werkstücks aus, denn es kann zeitgenauer und damit schneller bearbeitet werden.

Des Weiteren kann aufgrund des Sensorsignals mit Zeitstempel die Bearbeitungszeit vorab berechnet werden und ein Bearbeitungssignal an eine zweite Maschineneinheit, die beispielsweise als Aktor ausgebildet sein kann, ausgegeben werden. Deshalb muss eine Steuereinheit kein exaktes Trigger-Signal an die zweite Maschineneinheit zu einem bestimmten Bearbeitungszeitpunkt ausgeben, sondern es genügt, vor dem Bearbeitungszeitpunkt eine Bearbeitungszeit zu berechnen und diese der zweiten Maschineneinheit vorher mitzuteilen, so dass die zweite Maschineneinheit zur vorgegebenen Zeit selbst den Betrieb aufnimmt. Hierdurch wird eine zeitgenauere Ansteuerung des Aktorelements der zweiten Maschineneinheit ermöglicht. Damit lässt sich die Durchlaufzeit eines mit der Bearbeitungseinrichtung zu bearbeitenden Werkstücks weiter erheblich reduzieren.

Sinnvollerweise umfasst die Bearbeitungseinrichtung weitere erfindungsgemäße Sensoren und weitere zweite Maschineneinheiten mit Aktoren. Da die Maschineneinheiten mit Aktorelementen nur über die jeweilige Bearbeitungszeit informiert und nicht beim Bearbeitungszeitpunkt von der Steuereinheit getriggert werden, kann die Bearbeitungszeit zu einem willkürlichen Zeitpunkt vor dem Bearbeitungszeitpunkt gesendet werden, so dass keine Engpässe auf einer Kommunikationsleitung oder Feldbus entstehen, und trotzdem eine exaktere Ansteuerung aufgrund der gleichen Zeitbasis in den Maschineneinheiten gewährleistet wird. Dabei können der Sensor und die zweite Maschineneinheit ein Bearbeitungsaggregat, das bevorzugt eine Aggregatsteuereinheit umfasst, bilden. Somit kann die Signalverarbeitung zwischen der Steuereinheit und der Aggregatsteuereinheit aufgeteilt werden, wodurch die Steuereinheit entlastet wird.

Um die Sensorzeitbasis mit der Systemzeit zu synchronisieren und damit eine objektive Objekterfassungszeit zu erhalten, ist ein Synchronisationssignal vorgesehen, das periodisch an den Sensor gesandt wird.

Das Zeitglied ist als Zähler ausgebildet, der durch das Synchronisationssignal rücksetzbar ist. Damit ist ein sehr einfaches und entsprechend kostengünstiges Zeitglied erhalten.

Bevorzugt findet ein Datenaustausch zum Synchronisationszeitpunkt statt, an dem sämtliche notwendigen Informationen, wie das Objekterfassungssignal, das Zeitsignal und das Synchronisationssignal, in einem kurzen Datenaustausch übertragen werden.

Vorteilhafterweise ist dazu eine Kommunikationsschnittstelle vorgesehen zur Verbindung des Sensors mit der Steuereinheit, vorzugsweise über ein Bussystem.

In Weiterbildung der Erfindung kann ein Speicher vorgesehen sein, zum Speichern von ein oder mehreren Objekterfassungssignalen und zugehörigen Zeitsignalen. Damit ist es prinzipiell möglich, dass der Sensor seine Informationen auch zu einem späteren Zeitpunkt abgeben kann. Somit muss ein erfasstes Ereignis und/oder eine Ereigniszeit nicht sofort an eine Steuereinheit weitergegeben, sondern kann in dem Sensor zwischengespeichert werden, so dass auch zwei oder mehr Ereignisse und/oder Ereigniszeiten zusammen an eine Steuereinheit gesendet werden können.

Zeitglieder wie Zähler, haben das Problem, dass sie nur bis zu einer gewissen zeitlichen Höchstgrenze (maximaler Zählerstand) eindeutig sind. Um auf der Sensorzeitbasis eine eindeutige Ereigniszeit zu erhalten, kann es notwendig sein, zwischen zwei Datenübertragungen auf verschiedene Sensorzeitbasen zurückgreifen zu können, wie dies im Einzelnen weiter unten näher erläutert werden wird.

Deshalb sind in Weiterbildung der Erfindung ein oder mehrere weitere Zeitglieder, die unabhängig voneinander andere Sensorzeitbasen bereitstellen, vorgesehen, so dass eine passende Zeitbasis gewählt werden kann, um Eindeutigkeit zu erhalten.

In einer alternativen Ausführungsform kann die eine Sensorzeitbasis oder die mehreren Sensorzeitbasen statisch oder dynamisch parametrierbar sein.

Ebenfalls ist es möglich, eine Eindeutigkeit zu erhalten, indem die Sensorzeitbasis durch das Zeitglied bei Überlauf selbsttätig umparametriert wird. Beispielsweise kann bei Überlauf die Sensorzeitbasis verdoppelt werden, so dass der Zähler auf die Hälfte des maximalen Zählerstand zurückgesetzt wird.

Die Aufgabe wird auch gelöst durch ein Verfahren zum Betrieb eines solchen Sensors, wobei zunächst ein auf einer Systemzeit basierendes Synchronisationssignal von einer Steuereinheit empfangen und ein Ereignis mit dem Sensor erfasst wird und schließlich ein Objekterfassungssignal zusammen mit einem für die Objekterfassungszeit repräsentativem Zeitsignal, das auf einer Sensorzeitbasis beruht, als Erfassungssignal ausgegeben, wobei bevorzugt bei jedem Empfang eines Synchronisationssignals das Objekterfassungssignal und das Zeitsignal vom Sensor an die Steuereinheit übermittelt wird, wenn eine Objekterfassung erfolgte. Sinnvollerweise entspricht die Systemzeit der realen Weltzeit. Durch Verwenden der realen Weltzeit kann gewährleistet werden, dass auch weit voneinander entfernte Maschineneinheiten, die jeweils die Weltzeit empfangen, dieselbe Zeit haben, wobei eine Ereigniszeit an ein größeres Netzwerk ausgegeben werden kann, und eine Bearbeitungszeit von einem größeren Netzwerk, wie zum Beispiel dem Internet, erhalten und weiter übertragen werden kann.

Mit dem erfindungsgemäßen Sensor kann ein Objekt auf Vorhandensein oder in seiner Lage oder Position oder dergleichen erfasst werden. Mit dem allgemeinen Begriff "Objekterfassungssignal" soll also jedes binäre Signal gemeint sein, das von einer gewissen, vom Sensor zu erfassenden Größe abhängt.

Im Folgenden wird die Erfindung anhand von Ausführungsbeispielen näher erläutert. In der Zeichnung zeigen:
- Fig. 1: eine schematische Darstellung einer Bearbeitungseinrichtung gemäß ei- ner Ausführungsform der Erfindung;
- Fig. 2: ein Flussdiagramm, das die Schritte eines Bearbeitungsverfahrens ge- mäß einer weiteren Ausführungsform der Erfindung zeigt;
- Fig. 3: eine Durchlaufmaschine mit der Bearbeitungseinrichtung gemäß einer weiteren Ausführungsform der Erfindung;
- Fig. 4: ein Abfolgediagramm der Schritte in einer Durchlaufmaschine gemäß ei- ner beispielhaften Ausführungsform der vorliegenden Erfindung;
- Fig. 5: eine Darstellung wie Fig. 1 mit einer Fördereinrichtung und einem Bus- system;
- Fig. 6: Diagramme verschiedene Signale über die Zeit.

Bevorzugte Ausführungsformen der vorliegenden Erfindung werden nachfolgend ausführlich unter Bezugnahme auf die begleitenden Zeichnungen beschrieben. Dabei sind in verschiedenen Zeichnungen gleiche oder entsprechende Bauteile jeweils mit den gleichen oder ähnlichen Bezugszeichen bezeichnet.

Die bevorzugten Anwendungen des erfindungsgemäßen Sensors, der im Detail weiter unten beschrieben wird, werden ausführlich mit Bezug auf eine Bearbeitungseinrichtung und eine Durchlaufmaschine beschrieben. Jedoch wird bemerkt, dass die folgende Beschreibung nur Beispiele enthält und nicht als einschränkend angesehen werden sollte. Beispielsweise erkennt der Fachmann, dass alle Einheiten der Bearbeitungseinrichtung die gleiche Systemzeit besitzen, dies bedeutet, dass die Zeit in den Einheiten überall gleich ist. Deshalb kann nach Erfassung eines Ereignisses bei einem erfindungsgemäßen Sensor eine zweite Maschineneinheit bestimmt werden, die einen Befehl mit einer Zeitvorgabe nach der Erfassung des Ereignisses bekommt, um dann irgendeinen Betrieb auszuführen. Es sei hier bemerkt, dass der Betrieb nicht notwendigerweise an einem Objekt ausgeführt werden muss, das das Ereignis bei dem Sensor ausgelöst hat. Es ist auch denkbar, dass es sich bei dem Auslösen dieses Ereignisses um ein anderes Objekt handelt. So kann zum Beispiel ein erstes Objekt ein Ereignis zu einer genau erfassbaren Zeit, der Ereigniszeit, auslösen, wodurch die zweite Maschineneinheit eine Bearbeitungszeit empfängt, zu der ein Betrieb an beispielsweise einer zweiten Maschineneinheit durchzuführen ist. Dabei muss der Zeitunterschied zwischen der Ereigniszeit und der Bearbeitungszeit nur so groß gewählt werden, dass eine Kommunikation des Befehls zum Durchführen des Betriebs noch rechtzeitig an der zweiten Maschineneinheit ankommen kann, bevor die zweite Maschineneinheit einen Betrieb durchführen soll.

Die Bearbeitungseinrichtung kann zum Beispiel eine Durchlaufmaschine zur Bearbeitung von plattenförmigen Werkstücken, wie z. B. Vollholz- bzw. Spanplatten, sogenannte Tischlerplatten, Sperrholzplatten, Verbundplatten aus Holz, Kunststoff oder Metall oder dergleichen sein.

Im Folgenden wird als Anwendung für den erfindungsgemäßen Sensor unter anderem eine Bearbeitungseinrichtung und eine Durchlaufmaschine beschrieben, wobei die Bearbeitungseinrichtung eine Steuereinheit mit Zeitgeber umfasst, der eine Systemzeit erzeugt, die ausgegeben wird an den Sensor und mindestens eine weitere Maschineneinheit. Somit haben der Sensor und die zweite Maschineneinheit die gleiche Systemzeit, und das Erfassen eines Objekts von dem Sensor kann genau durch eine Ereigniszeit, basierend auf der Systemzeit, definiert werden.

Bei dem Beispiel der Durchlaufmaschine, die Objekte mit gleichbleibender Geschwindigkeit transportiert, kann so aus dem Ort des Sensors und der Ereigniszeit abgeleitet werden, wann sich dasselbe Objekt bei der zweiten Maschineneinheit befindet. Diese Zeit; im Folgenden als Bearbeitungszeit bezeichnet, wird beispielsweise von der Steuereinheit berechnet und an die zweite Maschineneinheit gesendet, so dass diese das Objekt zu der definierten Bearbeitungszeit bearbeiten kann. Somit kann eine Position des Objekts genau festgestellt und übermittelt werden, ohne dass eine Steuereinheit Trigger-Signale verarbeiten muss, die angeben, dass ein Sensor gerade gemessen hat, oder ein Aktor jetzt schalten oder sich bewegen soll.

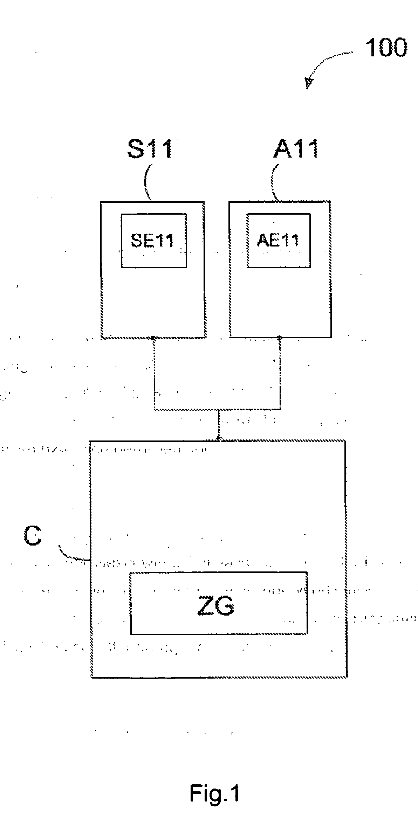

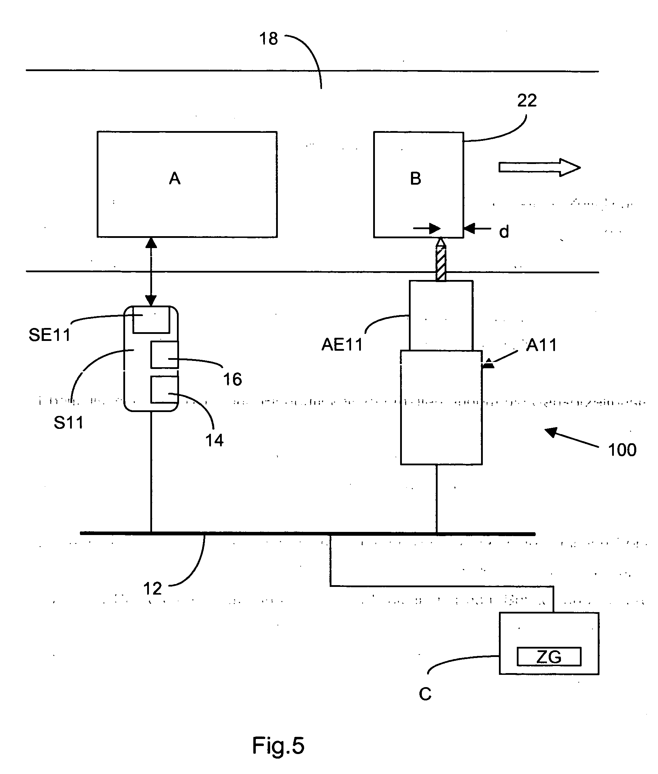

Fig. 1 und 5 zeigen schematisch eine Bearbeitungseinrichtung 100. Die Bearbeitungseinrichtung 100 umfasst eine Steuereinheit C mit einem Zeitgeber ZG, einen erfindungsgemäßen Sensor S11 als erste Maschineneinheit S11 mit einem Sensorelement SE11 und eine zweite Maschineneinheit A11 mit einem Aktorelement AE11. Diese Einheiten können individuelle Einheiten darstellen, die miteinander verbunden sind, oder können auch auf eine passende Art und Weise zusammengefasst werden, wobei: zum Beispiel die Steuereinheit in einer der Maschineneinheiten integriert sein kann.

In Fig. 1 sind die Maschineneinheiten S11 und A11 mit der Steuereinheit C verbunden. Die Verbindung erfolgt bevorzugt über ein Bussystem 12, z. B. ein Feldbus, wobei Profinet als Standard für industrielles Ethernet oder eine Abwandlung davon verwendet werden kann. Eine drahtlose Verbindung zwischen den Maschineneinheiten und der Steuereinheit C anstelle des Bussystems wäre auch denkbar.

Die Steuereinheit C stellt einen Master dar und umfasst den Zeitgeber ZG zum Ausgeben einer Systemzeit. Die Steuereinheit C dient zur Steuerung der Bearbeitungseinrichtung 100 und kann beispielsweise eine Bearbeitungszeit, basierend auf der vom Zeitgeber gegebenen Systemzeit, vorgeben. Die Steuereinheit C kann realisiert werden durch einen Prozessor, Computer oder eine integrierte Schaltung, wie zum Beispiel eine anwendungsspezifische integrierte Schaltung (ASIC) oder durch Software oder eine passende Kombination aus den obigen.

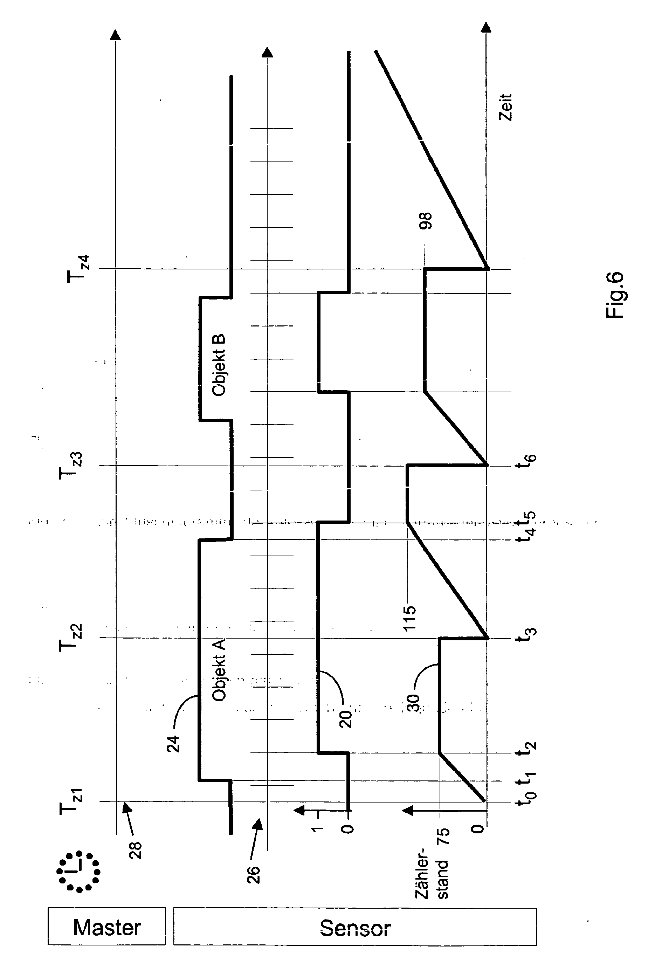

Die erste Maschineneinheit S11 umfasst mindestens ein Sensorelement SE11 und ist ausgebildet zum Erfassen eines Ereignisses und zum Ausgeben einer Ereigniszeit, basierend auf der Systemzeit, die mit der Erfassung des Ereignisses in Beziehung steht, wie dies im Folgenden anhand der Fig. 5 und 6 näher erläutert wird.

Der Sensor S11 umfasst neben dem Sensorelement SE11 ein vorzugsweise als Zähler ausgebildetes Zeitglied 14 und einen Speicher 16. Der Sensor S11 kann beispielsweise ats optischer Taster ausgebildet sein, der optisch über die Sensorelemente SE11 die Anwesenheit eines Objektes A bzw. B auf der Fördereinrichtung 18 detektieren kann. Der Sensor 11 ist als einfacher binärer Sensor ausgebildet, dessen zwei Schaltzustände "0" und "1" die Ab- bzw. Anwesenheit eines Objektes anzeigen, wie dies beispielsweise der Signalverlauf 20 in Fig. 6 zeigt.

Das zweite Maschinenteil A11 kann beispielsweise ein Bohrer sein, dessen Aufgabe es ist, an einer fest vorgegebenen Stelle, beispielsweise, in einem Abstand d hinter der Vorderflanke 22 des jeweiligen Objektes, ein Loch zu bohren. Damit dies zum richtigen Zeitpunkt geschehen kann, erhält der zweite Maschinenteil A11 ein entsprechendes Zeitsignal von der Steuerung C. Dies ist aber nur dann möglich, wenn die Steuerung exakte Informationen über die Positionen der Objekte auf der Fördereinrichtung 18 zu einer bestimmten Zeit hat. Um diese Informationen zu erhalten, ist der erfindungsgemäße Sensor S11 vorgesehen.

Der erfindungsgemäße Sensor S11 kann jetzt nicht nur ein Anwesenheitssignal auf Anforderung herausgeben, sondern ist zusätzlich dazu in der Lage, ein für die Objekterfassungszeit, wann also beispielsweise das Erfassungssignal von "0" auf "1" oder "1" auf "0" sich geändert hat, repräsentatives Zeitsignal auszugeben. Das Zeitsignal bildet somit einen Zeitstempel und ist bevorzugt ein Zählerstand des Zählers 14, der eine Sensorzeitbasis bereitstellt.

Diese Zusammenhänge sind in Fig. 6 dargestellt. Wie bereits erläutert, zeigt der Signalverlauf 20 das Anwesenheitssignal. Der Signalverlauf 24 zeigt ein theoretisches Anwesenheitssignal, wenn man beliebig genau messen könnte. Die Striche 26 zeigen die interne Sensortaktrate, mit welcher der Sensor seine Messungen vornimmt. Die Striche 28 zeigen die Takte des Masters bzw. der Steuerung, also die Zeitpunkte, zu denen ein Informationsaustausch auf dem Bussystem zwischen der Steuerung und dem Sensor erfolgt. Der,Verlauf 30 schließlich gibt den Zählerstand des Zählers 14 über die Zeit wieder.

Im Zeitpunkt t0=Tz1 erfolgt ein Kommunikationsaustausch zwischen dem Master und dem Sensor, bei der gleichzeitig über ein Synchronisationssignal der Zähler 14 auf null zurückgesetzt wird. Unabhängig von der. Systemzeit, die letztendlich mit dem Takt 28 des Masters korrespondiert, misst der Sensor mit seiner eigenen Taktrate 26, ob ein Objekt anwesend ist oder nicht. Tritt zu einem Zeitpunkt t1 ein Objekt A in den Erfassungsbereich des Sensors 11 ein, wird das Anwesenheitssignal 20 beim nächsten Sensortakt 26 auf "1" gesetzt, was in dem Beispiel nach Fig. 6 zum Zeitpunkt t2 geschieht. Zu diesem Zeitpunkt t2 wird der Zähler gestoppt (Zählerstand in diesem Beispiel bei 75) und der Zählerstand in den Speicher 16 gespeichert. Beim nächsten Mastertakt Tz2=t3 findet wieder eine Kommunikation zwischen Master und Sensor statt, bei der vom Sensor an den Master einerseits das Anwesenheitssignal 20 mit dem Wert "1" und der Zählerstand 75 übermittelt wird und außerdem wird durch das Synchronisationssignal vom Master der Zähler 14 des Sensors wieder auf null zurückgesetzt.

Auf diese Weise wurde von dem Sensor ein binäres Schaltsignal mit Zeitstempel, also einem für die Objekterfassungszeit t2 repräsentativen Zeitsignal, nämlich der Zählerstand, an den Master übermittelt. Schaltsignal und Zeitsignal bilden zusammen das Erfassungssignal. Mit diesen Daten kann der Master nun ausgehend von seinem Mastertakt auf den genauen Ereigniszeitpunkt der Erfassung des Objektes durch den Sensor zurückrechnen. Dazu muss der Master selbstverständlich die Sensorzeitbasis kennen, also welche Zeitdifferenz einem Zähltakt des Zählers 14 entspricht.

In analoger Weise wird detektiert, wann das Objekt A aus dem Erfassungsbereich ausgetreten ist, nämlich zum Zeitpunkt t4, was mit dem Sensor zum Zeitpunkt t5, wenn das Anwesenheitssignal wieder auf 0 schaltet, erfasst wird. Der Zählerstand ist dann in diesem Beispiel bis 115, seit dem letzten Mastertakt Tz2, hochgelaufen. Zum Zeitpunkt t6 erfolgt die Übermittlung an den Master.

Ein Problem kann dann auftreten, wenn zwischen zwei Mastertakten der Zähler 14 überläuft und wieder von Null anfängt zu zählen, obwohl kein Synchronisationssignal erfolgte. Um dies zu vermeiden ist in Weiterbildung der Erfindung vorgesehen, dass entweder mehrere Zähler 14 vorgesehen sind, denen jeweils unterschiedliche Zeitbasen zu Grunde liegen, so dass sie unterschiedlich schnell hochzählen oder dass die Sensorzeitbasis des einen Zählers 14 verändert wird. Bei Vorsehen von mehreren Zählern wird dann immer der Zählerstand desjenigen Zählers genommen, der gerade nicht übergelaufen ist. In der anderen Alternative kann die Veränderung der Sensorzeitbasis bei Inbetriebnahme des gesamten Systems geschehen oder der Sensor kann die Sensorzeitbasis selbsttätig umprogrammieren bei jedem Überlauf des Zählers. Dann würde beispielsweise der Zähler mit einer sehr kleinen Zeitbasis, was einer entsprechend hohe Zeitauflösung entsprechen würde, loslaufen und bei Überlauf könnte beispielsweise die Zeitbasis verdoppelt werden, so dass der Zähler zum Zeitpunkt des Überlaufs dann bei halbem Zählerstand weiterzählen würde mit der neuen Zeitbasis. Das Umparametrieren der Zählerzeitbasis erfolgt solange, bis das nächste Synchronisationssignal erfolgt. Dieses Vorgehen hat den Vorteil, dass immer die bestmögliche Zeitauflösung zur Erfassung der Ereigniszeit genommen wird.

Mit einem derart parametrierbaren Sensor sind Sensor und Master voneinander unabhängig, und es könnten die verschiedensten Sensoren mit unterschiedlichen Mastern in einer Bearbeitungsvorrichtung eingesetzt werden.

Im Folgenden sei der erfindungsgemäße Sensor noch einmal anhand einer beispielhaften Anwendung in seiner Funktionsweise erläutert:

Beispielsweise kann es sich bei dem Ereignis um das Erfassen einer Vorderflanke oder Hinterflanke eines Objekts A oder B, zum Beispiel einer Holzplatte, handeln. Der Sensor SE11 kann den Ereigniszeitpunkt speichern, der ein Zeitpunkt zu der herrschenden Systemzeit ist und gibt eine Ereigniszeit aus. Bei der ausgegebenen Ereigniszeit muss es sich nicht um den Ereigniszeitpunkt selbst handeln, da es auch einfach möglich ist, Zeit- oder Taktdifferenz auszugeben, die von einem Referenztakt bzw. Referenzuhrzeit gemessen werden. Beispielsweise kann ein Wert von 5 Takten oder 5 Sekunden nach z.B. einer letzten Synchronisierung ausgegeben werden, wobei die Synchronisierung bei allen Einheiten zur gleichen Zeit erfolgt ist.

Das Ereignis kann mit der auf der Systemzeit basierenden Ereigniszeit als Erfassungssignal an die Steuereinheit C ausgegeben werden. Das Erfassungssignal enthält dann eine Information über das Ereignis, wobei eine einfache Angabe wie Ja/Nein genügt, das heißt, Flanke erfasst oder nicht, sowie die Ereigniszeit, die wie oben angegeben, entweder als Absolutzeit angegeben werden kann oder als eine Differenzzeit zu einer Referenzzeit, wie zum Beispiel einem Synchronisierungsvorgang.

Das Sensorelement SE11 des Sensors S11 kann ein handelsübliches Sensorelement sein, das in Sensoren in der Automatisierungstechnik verwendet wird. Beispielsweise kann ein optisches Sensorelement verwendet werden, das eine Taktung von beispielsweise 5 kHz aufweist, was ein limitierender Faktor für die Genauigkeit der Messung ist.

Die zweite Maschineneinheit A11 umfasst mindestens ein Aktorelement AE11 und ist ausgebildet zum Durchführen eines Betriebs gemäß einer von der Steuereinheit vorgegebenen Bearbeitungszeit, basierend auf der Systemzeit und der Ereigniszeit. Im einfachsten Fall ist die zweite Maschineneinheit A11 ein Aktor, also das wandlerbezogene Gegenstück zu einem Sensor, der einen Betrieb zu einer vorgegebenen Bearbeitungszeit ausführt. Bei dem Betrieb kann es sich beispielsweise um ein Bearbeiten im Sinne von Stanzen, Lochen, Schneiden, Kleben, Bohren etc. handeln, aber andere Betriebe, wie ein Umleiten, Ausgeben oder Entfernen eines Objekts, das zu der Bearbeitungszeit bei der zweiten Maschineneinheit vorliegt, sind auch denkbar. Das Aktorelement kann z. B. ein Element sein, das solche und ähnliche Funktionen ausführen kann.

Genauer gesagt empfängt die zweite Maschineneinheit A11 die Bearbeitungszeit, die auf der Systemzeit und der Ereigniszeit basiert, und vergleicht die vorgegebene Bearbeitungszeit mit einer Ist-Zeit, der beim Empfang der Bearbeitungszeit herrschenden Systemzeit, die die gleiche ist für alle Einheiten in der Bearbeitungseinrichtung 100 und wartet mit dem Betrieb, bis die vorgegebene Bearbeitungszeit der Systemzeit entspricht. Bei der Bearbeitungszeit kann es sich daher auch, wie mit Bezug auf die Ereigniszeit, oben beschrieben, um eine absolute Zeit handeln oder eine relative Zeit, das heißt, um eine von einer Referenzzeit gemessene Zeitdifferenz.

In einer speziellen Ausführungsform ist die Steuereinheit C ausgebildet, basierend auf der Ereigniszeit, die Bearbeitungszeit zu berechnen. Zur Berechnung der Bearbeitungszeit enthält die Steuereinheit C einen Prozessor, Computer oder integrierte Schaltung, wie oben beschrieben, und kann, zum Beispiel bei einer Durchlaufmaschine mit Fördereinrichtung, unter Verwendung der Geschwindigkeit der Fördereinrichtung, bestimmen, wann ein bei der ersten Maschineneinheit S11 erfasstes Objekt bei der zweiten Maschineneinheit A11 ankommt. Diese Ankunftszeit entspricht sodann der Bearbeitungszeit, nämlich der Zeit, zu der ein Objekt von der zweiten Maschineneinheit bearbeitet werden kann. Um dies zu erreichen, ist die Steuereinheit C ausgebildet, die Bearbeitungszeit als Bearbeitungssignal an die zweite Maschineneinheit A11 auszugeben.

Wenn die Bearbeitungszeit erreicht ist, führt die zweite Maschineneinheit dann einen der oben beschriebenen Betriebe aus. Somit teilt die erste Maschineneinheit S11 nicht mit, dass sie gemessen hat, wie es herkömmlich der Fall ist, sondern wann bzw. was sie wann gemessen hat und gibt die genaue Zeit der Messung aus, die von allen Einheiten in der Bearbeitungseinrichtung verstanden wird, da alle auf der gleichen Systemzeit sind. Der zweiten Maschineneinheit A11 wird nicht mitgeteilt, dass sie jetzt schalten bzw. sich bewegen soll, sondern ihr wird mitgeteilt, wann sie sich wohin bewegen soll durch die vorgegebene Bearbeitungszeit, basierend auf der Systemzeit, die bei allen Einheiten der Bearbeitungseinrichtung 100 gleich ist.

Anstatt eines regelmäßigen Aussendens der Systemzeit, um zu gewährleisten, dass alle Einheiten auf der gleichen Zeit sind, kann es bevorzugt sein, die Maschineneinheiten durch ein einfaches Synchronisierungssignal regelmäßig zu synchronisieren. Dafür kann die Steuereinheit C zum Synchronisieren ausgebildet sein.

Ferner kann die erste Maschineneinheit S11 einen nicht gezeigten ersten Speicher umfassen zum Speichern der Ereignisse und von Ereigniszeiten. Dies kann vor allem für den Fall vorteilhaft sein, dass kurze Objekte mit kurzen Abständen zwischen Vorder- und Hinterflanke oder kurze Abstände zwischen zwei Objekten erfasst und zwischengespeichert werden können, so dass nicht jedes erfasste Ereignis oder Ereigniszeit sofort ausgegeben werden muss, sondern zwischengespeichert werden kann und dann mehrere Ereignisse und/oder ihre Ereigniszeiten auf einmal ausgegeben werden können. Hierbei muss lediglich gewährleistet werden, dass die Zeit 30 bis zur Übertragung der Ereigniszeit an die Steuereinheit C plus eine Verarbeitungszeit in der Steuereinheit und eine Zeit zum Senden der berechneten Bearbeitungszeit an die zweite Maschineneinheit A11, kürzer ist als die Zeit, die das Objekt braucht, um von der ersten Maschineneinheit S11 zur zweiten Maschineneinheit A11 zu gelangen.

Die zweite Maschineneinheit A11 kann auch einen nicht gezeigten zweiten Speicher umfassen zum Speichern von Bearbeitungszeiten. Somit können, ähnlich zu dem ersten Speicher, mehrere Bearbeitungszeiten und/oder ihre Bearbeitungssollwerte zwischengespeichert werden, die dann je nach Bedarf abgearbeitet werden können. Beispielsweise können drei Bearbeitungszeiten und deren Sollwerte gespeichert werden, so dass, wenn die Systemzeit jeweils eine der Bearbeitungszeiten erreicht, ein dem Sollwert entsprechender Betrieb durchgeführt wird.

Vorteilhaft kann es sich bei der Systemzeit um die reale Weltzeit handeln, das bedeutet, dass alle Einheiten in der Bearbeitungseinrichtung 100 beispielsweise durch ein Funksignal von einer Atomuhr, wie die Atomuhr der Physikalisch-Technischen Bundesanstalt, synchronisiert werden können.

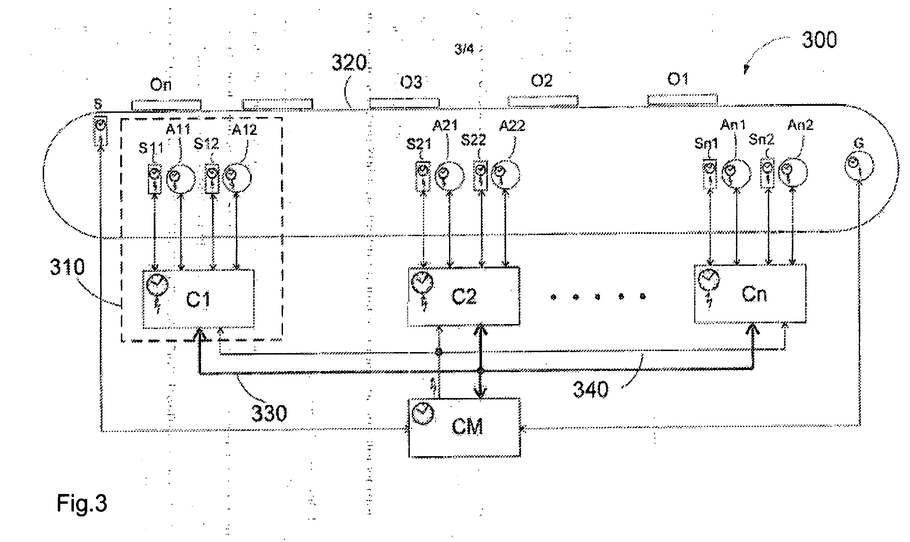

Wie später beschrieben, können die erste und zweite Maschineneinheit ein Bearbeitungsaggregat bilden. Dies bedeutet, dass dann nur eine bidirektionale Kommunikationsleitung zwischen dem Bearbeitungsaggregat und der Steuereinheit C nötig wäre. In einer weiteren Ausführungsform kann das Bearbeitungsaggregat eine Aggregatsteuereinheit umfassen, was später mit Bezug auf Fig. 3 näher beschrieben wird.

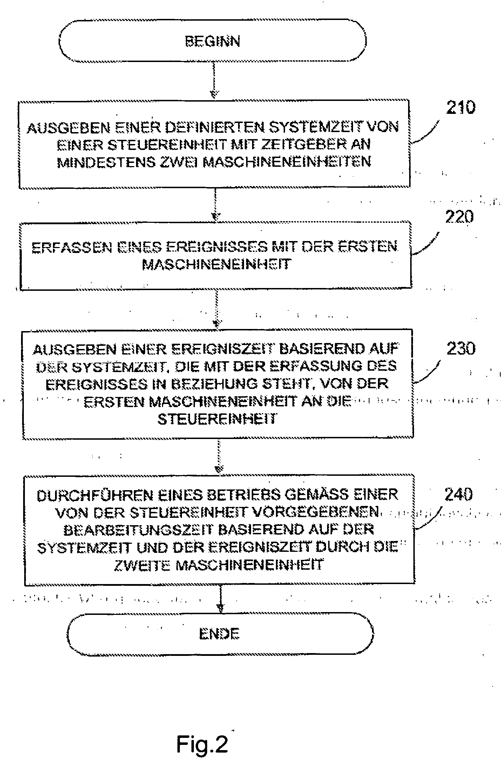

Als nächstes wird in Fig. 2 ein Flussdiagramm beschrieben, das die Schritte eines Bearbeitungsverfahrens für beispielsweise eine Durchlaufmaschine gemäß einer weiteren Ausführungsform der Erfindung zeigt. Dieses Verfahren kann beispielsweise von der in Fig. 1 gezeigten Bearbeitungsvorrichtung 100 ausgeführt werden. In einem ersten Schritt 210 wird eine definierte Systemzeit von einer Steuereinheit C mit Zeitgeber ZG an mindestens zwei Maschineneinheiten S11 und A11 ausgegeben. Wie oben beschrieben, kann die Systemzeit die reale Weltzeit sein, wobei nur immer darauf geachtet werden muss, dass die Einheiten des Systems, nämlich Steuereinheit und Maschineneinheiten, die gleiche Zeit anzeigen. Die Systemzeit kann über eine feste Kommunikationsleitung, wie zum Beispiel einem Feldbus, übertragen werden, oder auch drahtlos.

In einem nachfolgenden Schritt 220 wird ein Ereignis mit der ersten Maschineneinheit S11 erfasst. Beispielsweise kann, wie oben beschrieben, ein sich auf einer Fördereinrichtung einer Durchlaufmaschine befindliches Objekt erfasst werden, wenn beispielsweise seine Vorderflanke detektiert wird. Sodann kann in einem folgenden Schritt 230 die Zeit, die mit der Erfassung des Ereignisses in Beziehung steht, als Ereigniszeit basierend auf der Systemzeit von der ersten Maschineneinheit S11 an die Steuereinheit C ausgegeben werden. Hierbei handelt es sich nicht um ein einfaches Trigger-Signal, das angibt, dass zum Beispiel die Vorderflanke eines Objekts erfasst wurde, sondern um ein Signal mit der genauen Zeit, zu der die Vorderflanke erfasst wurde. Deshalb muss die Steuereinheit nicht eine Übertragungszeit in einer Kommunikationsleitung von der ersten Maschineneinheit zur Steuereinheit, wie beim Trigger-Signal, in Betracht ziehen, da die übertragene Ereigniszeit sich trotz möglicher Verzögerungen durch eine Kommunikationsleitung nicht ändert. Es muss lediglich sichergestellt werden, dass die Zeit, die die Ereigniszeit zur Steuereinheit braucht, und von der Steuereinheit zu der zweiten Maschineneinheit geringer ist, als Zeit, die das Objekt von der ersten Maschineneinheit zur zweiten Maschineneinheit braucht.

In dem nächsten Schritt 240 wird ein Betrieb gemäß einer von der Steuereinheit C vorgegebenen Bearbeitungszeit, basierend auf der Systemzeit und der Ereigniszeit, durch die zweite Maschineneinheit durchgeführt. Wie schon oben beschrieben, wird die Bearbeitungszeit, basierend auf der Ereigniszeit und der Systemzeit, bevorzugt durch die Steuereinheit berechnet. Danach wird die Bearbeitungszeit beispielsweise als Bearbeitungssignal von der Steuereinheit C an die zweite Maschineneinheit ausgegeben. Somit wird ein effizientes Verfahren zum akkuraten Vermessen und Bearbeiten von Objekten bereitgestellt.

Als Nächstes wird eine Durchlaufmaschine 300 mit einer darin integrierten Bearbeitungseinrichtung gemäß einer weiteren Ausführungsform mit Bezug auf Fig. 3 beschrieben.

Die in Fig. 3 gezeigte Durchlaufmaschine 300 umfasst mehrere Steuereinheiten C1 bis Cn, mehrere Maschineneinheiten S11, S21 bis Sn1; A11, A21 bis An1; S12, S22 bis Sn2; A12, A22 bis An2, eine Hauptsteuereinheit CM, einen Objektsensor S, einen Lagegeber G, eine Fördereinrichtung 320 und ein Bussystem 330 , 340. In Fig. 3 ist die in Fig. 1 beschriebene Bearbeitungseinrichtung 100 dargestellt durch die Maschineneinheiten S11, A11 und die Steuereinheit C1, die in Fig. 3 als Aggregatsteuereinheit bezeichnet wird zur Unterscheidung von der Hauptsteuereinheit CM. Jedoch können in Fig. 3 Funktionen der Steuereinheit aus Fig. 1 auch von der Hauptsteuereinheit CM übernommen.

Wie oben beschrieben, können die erste und zweite Maschineneinheit auch als Bearbeitungsaggregat 310 aufgefasst werden, das bevorzugt die Aggregatsteuereinheit C1 umfasst. Diese Aggregatsteuereinheit C1 und die Hauptsteuereinheit CM können die Funktionen der in Fig. 1 beschriebenen Steuereinheit C erfüllen.

Natürlich wäre auch in der Durchlaufmaschine von Fig. 3 denkbar, dass die Hauptsteuereinheit CM alle Funktionen der Aggregatsteuereinheiten C1, C2 bis Cn übernimmt, die dann nicht nötig wären, jedoch aus rein praktischen Überlegungen hinsichtlich der Verteilung von Verarbeitungsleistung, wird eine, wie in Fig. 3 gezeigte, Anordnung vorgebogen.

Wie in Fig. 3 gezeigt, kann die Bearbeitungseinrichtung auch eine dritte Maschineneininheit S12 mit einem zweiten Sensorelement und eine vierte Maschineneinheit mit einem zweiten Aktorelement A12 umfassen. Die dritte und vierte Maschineneinheit sind auch ausgebildet sein, die Systemzeit von der Steuereinheit bzw. der Hauptsteuereinheit CM durch die Aggregatsteuereinheit C1 zu empfangen. Die Aggregatsteuereinheit C1 ist ferner ausgebildet, basierend auf dem Ereignis und der Ereigniszeit, die Maschineneinheit, mit Aktorelement A11, A12 auszuwählen, der die Bearbeitungszeit mitzuteilen ist.

Herkömmlich wird einem Sensor, zum Beispiel Maschineneinheit S11, ein Aktor, zum Beispiel Maschineneinheit A11, zugewiesen, so dass ein durch die Maschineneinheit S11 erfasstes Ereignis der Maschineneinheit A11 mitgeteilt wird. Jedoch ist es auch möglich, dieses Ereignis der vierten Maschineneinheit A12 mitzuteilen, was basierend auf der Art des Ereignisses durchgeführt werden kann.

Beispielsweise kann, falls es sich bei dem Ereignis um eine Detektion einer Vorderflanke eines Objekts handelt, diese Information für die zweite und vierte Maschineneinheit wichtig sein, wobei bei der zweiten Maschineneinheit beispielsweise ein Loch in das Objekt gebohrt und bei der vierten Maschineneinheit dieses Loch mit einem Kleber gefüllt wird.

Die in Fig. 3 gezeigten Aggregatsteuereinheiten C1 bis Cn sind bevorzugt ausgebildet, um mit der Hauptsteuereinheit CM über ein Bussystem 330, 340 zu kommunizieren, und über das Bussystem 330, 340 die Systemzeit zu empfangen. In Fig. 3 sind zwei Kommunikationsleitungen 330 und 340 gezeigt, wobei eine Systemzeit gesendet wird und bevorzugt auch eine Synchronisierung über die Kommunikationsleitung 340 stattfindet, was auch durch die Pfeilrichtung angedeutet ist. Dabei wird eine Systemzeit, dargestellt durch die Uhr in der Hauptsteuereinheit, Übertragen an die Aggregatsteuereinheiten C1 bis Cn. Ferner ist ein Blitzsymbol gezeigt, das darstellt, dass ein Synchronisierungsverfahren die Aggregatsteuereinheiten C1 bis Cn phasensynchron synchronisieren kann.

Die zweite Kommunikationsleitung 330 ist bidirektional ausgebildet und sendet Signale von den Aggregatsteuereinheiten C1 bis Cn zur Fiäuptsteuereinheit CM und von der Hauptsteuereinheit zu den Aggregatsteuereinheiten. Beispielsweise werden die Erfassungssignale von den Aggregatsteuereinheiten an die Hauptsteuereinheit gesendet, wobei die Hauptsteuereinheit CM Bearbeitungssignale an die Aggregatsteuereinheiten C1 bis Cn senden kann. Natürlich können die beiden Funktionen der Kommunikationsleitungen 330 und 340 auch in einem einzigen Bussystem integriert werden. Hierbei können auch relativ langsame Feldbusse und unterschiedliche Steuereinheiten verwendet werden, da wie vorher beschrieben, es in der vorliegenden Erfindung nicht auf den genauen Empfang bzw. Aussendung von Trigger-Signalen ankommt, sondern Signale mit einer Zeitvorgabe gesendet und empfangen werden von/an die Maschineneinheiten. Die exakte Lage kann so in der Zeit erfasst und über mehrere Feldbusse und unterschiedliche Steuereinheiten übertragen werden.

Zum Beispiel werden an einer Stelle des verteilten Systems, z. B. bei einer der Aggregatsteuereinheiten oder der Hauptsteuereinheit für Daten von dem Lagegeber G, die Daten über die Ermittlung der relativen oder absoluten Zeiten und der entsprechenden Wege verrechnet, die Bearbeitungszeiten und Aktorsollwerte ermittelt und wieder zu unterschiedlichen Steuereinheiten und/oder den über Feldbussen angebundenen Aktoren gesendet.

Im Folgenden wird das Bearbeitungsaggregat 310 als Beispiel für die Aggregatsteuereinheiten C1 bis Cn mit ihren entsprechenden Maschineneinheiten beschrieben. Wie in Fig. 1 diskutiert, sind die Maschineneinheiten verbunden mit der Steuereinheit C, den Aggregatsteuereinheiten C1 bis Cn in Fig. 3, und können bidirektional miteinander kommunizieren. In Fig. 3 wird ausgehend von der Hauptsteuereinheit CM die Systemzeit an alle untergelagerten Aggregatsteuereinheiten C1 bis Cn und von diesen weiter an die verbundenen Maschineneinheiten gesandt. Das Bearbeitungsaggregat 310 wird daher immer auf derselben Systemzeit mit den anderen Einheiten der Dürchlaufmaschine 300 gehalten. Wie oben diskutiert, kann das Bearbeitungsaggregat mehrere Maschineneinheiten aufweisen, die Sensoren und Aktoren darstellen können.

Zusätzlich zu den Maschineneinheiten mit Sensorelement S11, S12, S21, S22 bis Sn1, Sn2 kann in einer weiteren Ausführungsform die Durchlaufmaschine von Fig. 3 einen Objektsensor S umfassen zum Erfassen eines Objekts 01 bis On auf der Fördereinrichtung 320 und zum Ausgeben eines Objekt-Erfassungssignals enthaltend eine Objekt-Erfassungszeit, basierend auf der Systemzeit. In Fig. 3 wird diese Objekt-Erfassungszeit der Hauptsteuereinheit CM mitgeteilt. Der Objektsensor S funktioniert ähnlich wie die oben beschriebenen Maschineneinheiten mit Sensorelement, und kann so die Maschineneinheiten und ihre Aggregatsteuereinheiten auf die Ankunft eines Objekts vorbereiten. Genauer gesagt, werden die Objekte 01 bis On mit möglichst konstanter Geschwindigkeit von der Fördereinrichtung bewegt. Die Geschwindigkeit kann im Bereich von 0,1 m/s bis 20 m/s sein und bevorzugt zwischen 0,5 m/s und 3 m/s. Der Objektsensor S registriert jeweils die positive und/oder negative Schaltflanke eines Objekts und verknüpft dies im Objektsensor mit dem Objekt-Erfassungszeitpunkt, ähnlich wie bei den Maschineneinheiten mit Sensorelement.

Die Durchlaufmaschine kann ferner einen Lagegeber G umfassen zum Ausgeben eines Messsignals entsprechend einer Messung einer Position der Fördereinrichtung 320 an die Hauptsteuereinheit CM, wobei das Messsignal eine Messzeit basierend auf der Systemzeit enthält, die mit der Messung in Beziehung steht. Im Unterschied zu den Ereigniszeiten und der Objekt-Erfassungszeit, bei denen ein Objekt erfasst werden kann, dient der Lagegeber G dazu, die Bewegung der Fördereinrichtung 320 zu messen. Beispielsweise kann der Lagegeber G die Fortbewegung bzw. Drehung der Fördereinrichtung 320 zu mehreren aufeinander folgenden Zeiten messen, wodurch der zurückgelegte Weg in einer bestimmten Zeit gemessen werden kann. Die Lage des Transportbandes der Fördereinrichtung 320 wird bevorzugt in möglichst kleinen Abtastzeiten durch den Lagegeber G zyklisch ermittelt und in Verbindung mit dem Zeitpunkt der Messung verknüpft. Diese Informationen des Objektsensors S und des Lagegebers G können dann zur Hauptsteuereinheit CM gesendet werden, wo diese informationen beispielsweise verarbeitet werden können, so dass die Geschwindigkeit der Fördereinrichtung ermittelt werden kann, sowie eine Variierung in der Geschwindigkeit, da die Länge des Wegs sich bei gleichen Zeitabständen unterscheiden kann. Jedoch ist bei großen Fördereinrichtungen mit großer Trägheit eine annähernd konstante Geschwin-digkeit anzunehmen.

Wie oben diskutiert, kann die Geschwindigkeit von der Hauptsteuereinheit CM oder den Aggregatsteuereinheiten C1 bis Cn verwendet werden zur Berechnung einer Position eines Objekts auf der Fördereinrichtung zu unterschiedlichen Zeiten. Dabei wird die Geschwindigkeit aus Messsignalen von dem Lagegeber G abgeleitet und mit Hilfe der Ereigniszeit bzw. Objekt-Erfassungszeit, zu der ein Objekt bei einer bestimmten Position war, kann die Position des Objekts in der Zukunft vorhergesagt werden, was wiederum als Bearbeitungszeit an die Maschineneinheiten mit Aktorelement zur Bearbeitung weitergegeben werden kann. Anders ausgedrückt, verknüpft die Hauptsteuereinheit CM durch einen speziellen Algorithmus die Schaltzeitpunkte der oben beschriebenen Schaltflanke mit dem zu diesem Zeitpunkt herrschenden Wegpunkt des Lagegebers G. Die Ergebnisse der Verknüpfung können den Aggregatsteuereinheiten C1 bis Cn zur Verfügung gestellt werden. Die Steuereinheit, z. B. die Hauptsteuereinheit oder die Aggregatsteuereinheit oder eine Kombination derselben, berechnet dann die Steuerungsaufgaben der einzelnen Maschinenfunktionen und ermitteln so die exakten Schaltwege für die Maschineneinheiten mit Aktorelement.

Um diesen Schaltweg einzuhalten, d. h. immer die korrekte Bearbeitungszeit zu ermitteln, werden z. B. die Geschwindigkeit der Objekte sowie die Totzeiten der Aktorelemente permanent mit der Systemzeit verrechnet und mit der zu diesem "Sollschaltzeitpunkt" herrschenden Weginformation verknüpft. Dadurch kann eine exakte Schaltwegaktion generiert werden, und zur Ermittlung der Position werden Zeiten an einer Weginformation gestützt. Wie oben beschrieben, werden unterschiedliche Laufzeiten und Reaktionszeiten der Steuereinheiten, der Maschineneinheiten und des Bussystems durch eine Synchronisierung durch Verteilen der Systemzeit exakt aufeinander abgestimmt.

Die Präzision der Durchlaufmaschine hängt somit nicht notwendigerweise von der Laufzeit der Feldbusse oder der Zykluszeit der jeweiligen Steuereinheiten ab, sondern von einer Veränderung der Transportbandgeschwindigkeit und der Auflösung der Systemzeit in den Maschineneinheiten und dem Lagegeber und Objektsensor, die auch die Systemzeit empfangen und synchronisiert werden können. Es muss lediglich gewährleistet werden, dass die Zeit zwischen der Erfassung von zwei Objekten und der Bearbeitungszeit der beispielsweise zweiten Maschineneinheit größer ist als die Laufzeit der Kommunikation von der ersten Maschineneinheit zur Verarbeitung und zurück zu der zweiten Maschineneinheit. Durch die mit Bezug auf Fig. 3 beschriebene Ausführungsform lässt sich der Verdrahtungsaufwand im Vergleich zu herkömmlichen Durchlaufmaschinen wesentlich verringern und eine Einsparung von redundanten Sensoren, Querinformation zwischen Steuereinheiten und Signalwandlungen wird ermöglicht. Vor allem jedoch können die Objekte wesentlich genauer erfasst werden und Maschineneinheiten mit Aktorelement können wesentlich genauer angesteuert werden.

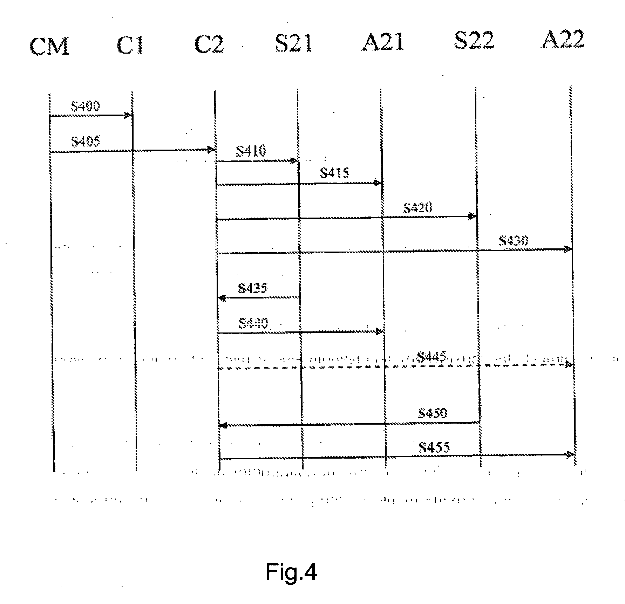

Als Nächstes wird ein Abfolgediagramm der Kommunikationsschritte in der Durchlaufmaschine 300 gemäß einer beispielhaften Ausführungsform mit Bezug auf Fig. 4 beschrieben. In diesem Beispiel werden nur die Hauptsteuereinheit CM, die Aggregatsteuereinheiten C1 und C2, sowie die Maschineneinheiten S21, A21, S22 und A22 betrachtet. In diesem Beispiel wird angenommen, dass die Hauptsteuereinheit CM die Systemzeit in den Schritten S400 und S405 an die Aggregatsteuereinheiten C1 und C2 aussendet. In Fig. 4 sind die Pfeile für die Schritte S400 und C405 mit einem Abstand dargestellt, was jedoch nicht bedeuten muss, dass zwischen diesen beiden Schritten eine Zeitverzögerung auftreten muss. Daher ist es auch möglich, dass die Ausgabe der Systemzeit oder eine Synchronisierung des Systems von allen Aggregatsteuereinheiten gleichzeitig verstanden werden kann.

In dem Beispiel von Fig. 4 wird das Objekt 03 in Fig. 3 betrachtet, das sich auf der Fördereinrichtung 320 vor den Maschineneinheiten der zweiten Aggregatsteuereinheit C2 befindet. Deshalb werden hier die Maschineneinheiten der Aggregatsteuereinheit C2 betrachtet. Bei den Schritten 5410, S415, S420 und 5430 wird die Systemzeit oder eine Synchronisierung von der Aggregatsteuereinheit C2 an die Maschineneinheiten S21, A21, S22 und A22 Übermittelt. Wie bei den Schritten S400 und S405 kann diese Übermittlung auch gleichzeitig erfolgen und ist in Fig. 4 nur aus Gründen der Lesbarkeit mit Abständen versehen.

Bei der Maschineneinheit S21 in Fig. 3 kann nun das Objekt 03 erfasst werden, was durch Schritt S435 gekennzeichnet ist. Hierbei wird das entsprechende Erfassungssignal mit der Ereigniszeit zurück an die Aggregatsteuereinheit C2 gesandt, die wiederum selbst eine Bearbeitungszeit berechnen kann, und diese als Bearbeitungssignal in Schritt S440 an die Maschineneinheit A21 senden kann. Natürlich ist es auch möglich, dass die Hauptsteuereinheit CM diese Bearbeitungszeit berechnet, wobei das Erfassungssignal dann von der Aggregatsteuereinheit C2 zurück zur Hauptsteuereinheit CM gesandt werden müsste, dort berechnet würde und wieder zurück zur Aggregatsteuereinheit C2 gesandt werden müsste. Diese Alternative ist jedoch in Fig. 4 nicht gezeigt, ist jedoch eine weitere Möglichkeit für einen Kommunikationsablauf.

Schritt S445 ist durch einen gestrichelten Pfeil dargestellt, der kennzeichnen soll, dass dieser Schritt optional ist. Dieser Schritt entspricht der oben diskutierten Situation, dass ein Ereignis bei der Maschineneinheit S21 auch eine Bearbeitung in einer weiteren Maschineneinheit mit Aktorelement, zum Beispiel Maschineneinheit A22, hervorrufen kann, so dass zwei verschiedene Bearbeitungszeiten für verschiedene Maschineneinheiten basierend auf der gleichen Ereigniszeit und Systemzeit von der Aggregatsteuereinheit oder Hauptsteuereinheit berechnet werden könnten. In Schritt S450 ist dargestellt, dass bei einem weiteren Vorrücken des Objekts 03 die Maschineneinheit S22 das Objekt 03 erfassen kann und eine entsprechende Ereigniszeit zurück an die Aggregatsteuereinheit C2 ausgeben kann. Diese Ereigniszeit kann wiederum in der Aggregatsteuereinheit C2 zur Berechnung einer weiteren Bearbeitungszeit verwendet werden, die in Schritt S455 an die Maschineneinheit A22 gesendet werden kann, so dass die Maschineneinheit A22 zu der vorgegebenen zweiten Bearbeitungszeit einen Betrieb durchführt.

## Patentansprüche

1. Sensor, insbesondere zum Einsatz in einer Bearbeitungseinrichtung, die eine Steuereinheit (C; C1, C2, ..., Cn; CM) mit Zeitgeber (ZG) zum Ausgeben einer Systemzeit sowie mindestens eine mit der Steuereinheit verbundene Maschineneinheit (A11) zum Empfangen der Systemzeit umfasst und der Sensor (S11) als binärer Sensor zur Ausgabe eines binären Objekterfassungssignals (20) ausgebildet ist, **dadurch gekennzeichnet, dass** der Sensor ein als Zähler ausgebildetes Zeitglied (14) aufweist, das eine Sensorzeitbasis bereitstellt, die mit der Systemzeit über ein Synchronisationssignal periodisch synchronisierbar ist und der Zähler (14) durch das Synchronisationssignal rücksetzbar ist und dass einerseits das Objekterfassungssignal (20) und andererseits ein für die Objekterfassungszeit repräsentatives Zeitsignal (30) der Sensorzeitbasis als Zählerstand ausgebbar ist.

2. Sensor nach Anspruch 1, **dadurch gekennzeichnet, dass** das Objekierfassungssignal und das Zeitsignal zusammen als Erfassungssignal, bevorzugt zum Synchronisationszeitpunkt, ausgegeben werden.

3. Sensor nach einem der vorhergehenden Ansprüche, **gekennzeichnet durch** eine Kommunikationsschnittstelle zur Verbindung mit der Steuereinheit, vorzugsweise über ein Kommünikationssystem, wie zum Beispiel ein Bussystem.

4. Sensor nach einem der vorhergehenden Ansprüche, **gekennzeichnet durch** einen Speicher zum Speichern von Objekterfassungssignalen und Zeitsignalen.

5. Sensor nach einem der vorhergehenden Ansprüche, **gekennzeichnet durch** ein oder mehrere weitere Zeitglieder, die unabhängig voneinander andere Sensorzeitbasen bereitstellen.

6. Sensor nach einem der vorhergehenden Ansprüche, **dadurch gekennzeichnet, dass** die Sensorzeitbasen statisch oder dynamisch parametrierbar sind.

7. Sensor nach einem der vorhergehenden Ansprüche, **dadurch gekennzeichnet, dass** die Sensorzeitbasis durch das Zeitglied bei Überlauf selbsttätig umparametriert wird.

## Claims

1. A sensor, in particular for use in a processing device, which includes a control unit (C; C1, C2, ..., Cn; CM) with a timer (ZG) for the outputting of a system time and which includes at least one machine unit (A11) connected to the control unit for the reception of the system time, and the sensor (S11) is made as a binary sensor for the outputting of a binary object detection signal (20), **characterised in that** the sensor has a timing element (14) which is made as a counter and which provides a sensor time base which can be periodically synchronised with the system time via a synchronisation signal, with the counter (14) being resettable by the synchronisation signal; and **in that** the object detection signal (20), on the one hand, and a time signal (30) of the sensor time base representative for the object detection time, on the other hand, can be output as a count.

2. A sensor in accordance with claim 1, **characterised in that** the object detection signal and the time signal are output together as a detection signal, preferably at the time of synchronisation.

3. A sensor in accordance with one of the preceding claims, **characterised by** a communications interface for connection to the control unit, preferably via a communications system such as a bus system.

4. A sensor in accordance with any one of the preceding claims, **characterised by** a memory for the storage of object detection signals and time signals.

5. A sensor in accordance with any one of the preceding claims, **characterised by** one or more further timing elements which provide different time bases independently of one another.

6. A sensor in accordance with any one of the preceding claims, **characterised in that** the sensor time bases can be parameterised statically or dynamically.

7. A sensor in accordance with any one of the preceding claims, **characterised in that** the sensor time base is automatically reparameterised by the timing element on an overflow.

## Revendications

1. Capteur, en particulier pour l'utilisation dans un système d'usinage, qui comprend une unité de commande (C ; C1, C2, ..., Cn ; CM) avec une horloge (ZG) pour fournir un temps systémique, ainsi qu'au moins une unité machine (A11) reliée à l'unité de commande pour recevoir le temps systémique, et le capteur (S11) est réalisé sous forme de capteur binaire pour fournir un signal de détection d'objet (20) binaire, **caractérisé en ce que** le capteur comprend un circuit temporel (14) réalisé sous forme de compteur, qui fournit une base temporelle pour le capteur, susceptible d'être synchronisé périodiquement avec le temps systémique via un signal de synchronisation, et le compteur (14) peut être remis à zéro par le signal de synchronisation, et **en ce que** le signal de détection d'objet (20) d'une part et un signal temporel (30) représentatif pour le temps de détection d'un objet d'autre part peut être fourni à la base temporelle pour le capteur sous forme d'état de comptage.

2. Capteur selon la revendication 1, **caractérisé en ce que** le signal de détection d'objet et le signal temporel sont fournis conjointement à titre de signal de détection, de préférence à l'instant de synchronisation.

3. Capteur selon l'une des revendications précédentes, **caractérisé par** une interface de communication pour la liaison avec l'unité de commande, de préférence via un système de communication comme par exemple un système de bus.

4. Capteur selon l'une des revendications précédentes, **caractérisé par** une mémoire pour mémoriser des signaux de détection d'objets et des signaux temporels.

5. Capteur selon l'une des revendications précédentes, **caractérisé par** un ou plusieurs autres circuits temporels qui fournissent d'autres bases temporelles de capteur indépendamment les uns des autres.

6. Capteur selon l'une des revendications précédentes, **caractérisé en ce que** les bases temporelles de capteur sont susceptibles d'être paramétrées de façon statique ou dynamique.

7. Capteur selon l'une des revendications précédentes, **caractérisé en ce que** la base temporelle de capteur est susceptible d'être à nouveau paramétrée de façon autonome par le circuit temporel en cas de dépassement.
